# EUROPEAN PATENT APPLICATION

(11) **EP 4 362 602 A1**
(43) Date of publication of application: **01.05.2024**
(21) Application number: 21947064.8
(22) Date of filing: 22.06.2021
(51) Int. Cl.: H04W 76/19

(54) **TERMINAL AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP); MATSUMURA Yuki, Tokyo 100-6150 (JP)
(74) Representative: Hoffmann Eitle
(86) International application number: PCT/JP2021/023688
(87) International publication number: WO 2022/269778

(57) **Abstract**

The terminal transmits and receives a beam with the first transmission/reception point and the second transmission/reception point, and controls the beam with the first transmission/reception point and the second transmission/reception point. The terminal uses a counter and a timer for the first transmission/reception point when a beam failure of the beam with the first transmission/reception point is detected while the first transmission/reception point and the second transmission/reception point are configured, and uses a counter and a timer for the second transmission/reception point when a beam failure of the beam with the second transmission/reception point is detected while the first transmission/reception point and the second transmission/reception point are configured.

## Description

### [Technical Field]

The present disclosure relates to a terminal and a radio communication method supporting a plurality of transmission/reception points.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

In Release 17 of 3GPP, an expansion of Multiple-Input Multiple-Output (MIMO) is considered (Non-Patent Literature 1). For example, it is contemplated that a terminal (User Equipment, UE) may support operations related to a plurality of transmission/reception points (TRP) between cells through signaling such as Layer 2.

A beam (may be called as antenna beam) failure detection (BFD) and recovery (BFR) method in such a multiple TRP (mTRP) environment is also contemplated (Non-Patent Literature 2). For example, the introduction of a beam failure counter (BFI_COUNTER) and a timer (beamFailureDetectionTimer) specific to each TRP using TRP/BFD-RS (Reference Signal) or BFR-RS is contemplated.

### [Citation List]

### [Non-Patent Literature]

[Non-Patent Literature 1]
   "Revised WID: Further enhancements on MIMO for NR," RP-202024, 3GPP TSG RAN Meeting #89e, 3GPP, September 2020
[Non-Patent Literature 2]
   "Beam failure with mTRP," R2-2105870, 3GPP TSG-RAN WG2 Meeting #114 Electronic, 3GPP, May 2021

### [Summary of Invention]

As described above, when configurations such as counters and timers for beam failures specific to each TRP are applied in an mTRP environment, the relationship between the beam failure counters and timers for conventional serving cells is unclear and the UE may not operate properly.

Accordingly, the following disclosure is made in light of such a situation, and the purpose of the disclosure is to provide a terminal and a radio communication method capable of appropriately performing operations related to detection and recovery of beam failures in the case of multiple TRPs (mTRPs).

One aspect of the present disclosure is a terminal (UE200) including a transmission/reception unit (radio communication unit 210) that transmits and receives a beam with a first transmission/reception point and a second transmission/reception point, and a control unit (control unit 240) that controls the beam with the first transmission/reception point and the second transmission/reception point. The control unit, in a state where the first transmission/reception point and the second transmission/reception point are configured, when a beam failure of the beam with the first transmission/reception point is detected, uses a counter and a timer for the first transmission/reception point, and in a state where the first transmission/reception point and the second transmission/reception point are configured, when a beam failure of the beam with the second transmission/reception point is detected, uses a counter and a timer for the second transmission/reception point.

An aspect of the present disclosure is a radio communication method including the steps of transmitting/receiving a beam with a first transmission/reception point and a second transmission/reception point, and controlling the beam with the first transmission/reception point and the second transmission/reception point. In the controlling step, in a state where the first transmission/reception point and the second transmission/reception point are configured, when a beam failure of the beam with the first transmission/reception point is detected, counter and a timer for the first transmission/reception point are used, and in a state where the first transmission/reception point and the second transmission/reception point are configured, when a beam failure of the beam with the second transmission/reception point is detected, counter and a timer for the second transmission/reception point are used.

### [Brief Description of Drawings]

[FIG. 1] FIG. 1 is an overall schematic diagram of a radio communication system 10.
[FIG. 2] FIG. 2 is a functional block diagram of a gNB100.
[FIG. 3] FIG. 3 is a functional block diagram of a UE200.
[FIG. 4] FIG. 4 is a diagram showing an example of configuring a beam BM in an mTRP environment.
[FIG. 5] FIG. 5 is a diagram showing an example of an operation flow related to BFD and BFR of UE200 according to operation example 1.
[FIG. 6] FIG. 6 is a diagram showing an example of a beam failure-related RRC communication sequence according to operation examples 2 and 3.
[FIG. 7] FIG. 7 is a diagram showing an example of the configuration of the RLF report according to the operation example 2.
[FIG. 8] FIG. 8 is a diagram showing a configuration example of MCGFailureInfo (FailureReportMCG) according to operation example 2.
[FIG. 9] FIG. 9 is a diagram showing a configuration example of SCGFailureInfo (FailureReportSCG) according to operation example 2.
[FIG. 10] FIG. 10 is a diagram showing a configuration example of the beamFailureRecoverySCellConfig according to the operation example 3.
[FIG. 11] FIG. 11 is a diagram showing an example of a hardware configuration of the gNB100 and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

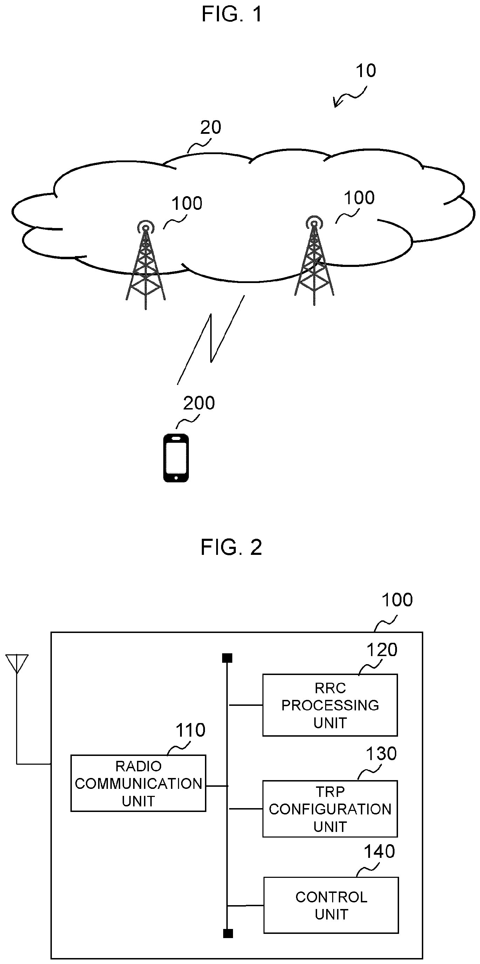

FIG. 1 is an overall schematic diagram of the radio communication system 10 according to the present embodiment. The radio communication system 10 is a radio communication system according to 5G New Radio (NR) and includes the Next Generation-Radio Access Network 20 (hereinafter referred to as the NG-RAN20 and the terminal 200 (User Equipment 200, UE200).

It should be noted that the radio communication system 10 may be an radio communication system according to a system called Beyond 5G, 5G Evolution or 6G.

The NG-RAN20 includes a radio base station 100 (gNB100). The specific configuration of the radio communication system 10 including the number of gNBs and UEs is not limited to the example shown in FIG. 1.

The NG-RAN20 actually includes a plurality of NG-RAN Nodes, specifically gNBs (or ng-eNBs), connected to a core network (5GC, not shown) according to 5G. Note that the NG-RAN20 and 5 GCs may be referred to simply as "networks ".

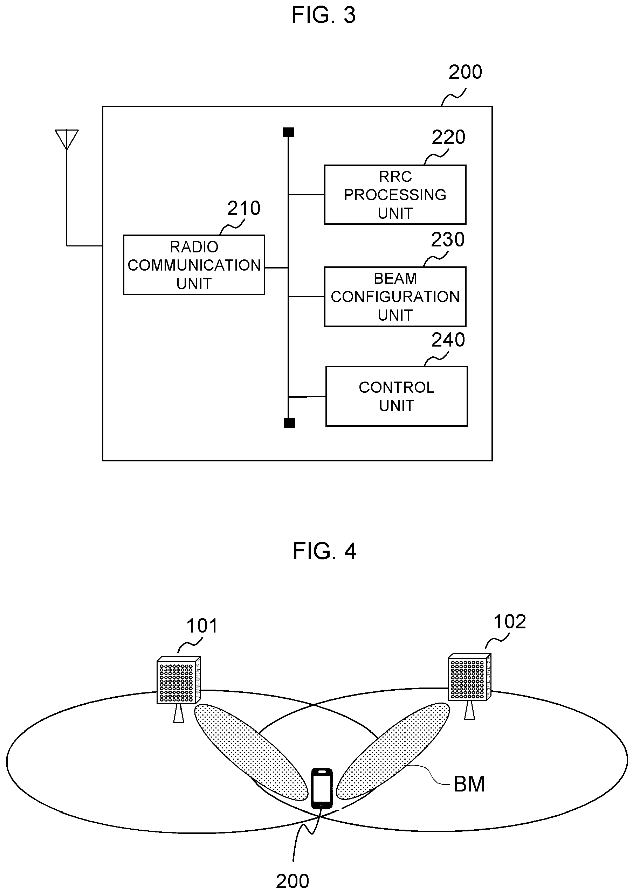

The gNB100 is a radio base station in accordance with the NR, and performs radio communication in accordance with the UE200 and the NR. The gNB100 and UE200 can accommodate a plurality of antenna elements, specifically, Massive MIMO that generates a more directional beam BM (see FIG. 4) by controlling radio signals transmitted from a plurality of transmission/reception points, e.g., transmission/reception point 101 and transmission/reception point 102 (Not shown in FIG. 1, see FIG. 4), Carrier Aggregation (CA) that uses a plurality of component carriers (CCs) bundled together, and Dual Connectivity (DC) that simultaneously communicates between the UE and each of a plurality of NG-RAN Nodes.

The gNB100 (radio base station) may transmit/receive radio signals via one or more transmission/reception points (TRPs). The gNB100 may support single-user MIMO using one TRP and may support distributed MIMO transmission of a given channel (For example, PDSCH: Physical Downlink Shared Channel) or the like by coordinating two TRPs.

The TRP may be interchanged with cells, radio base stations, Node B, antenna ports, antenna port groups, antenna panels, panels, antenna elements, transmission/reception points, etc.

In addition, in this embodiment, the UE200 may support operations related to a plurality of transmission/reception points (mTRPs) between cells by signaling such as layer 1 and/or layer 2. Specifically, the UE200 may support fault detection (BFD) and recovery (BFR) of the beam BM in an mTRP environment.

### (2)Function block configuration of radio communication system

Next, the function block configuration of the radio communication system 10 will be described. Specifically, the function block configuration of the gNB100 and the UE200 will be described.

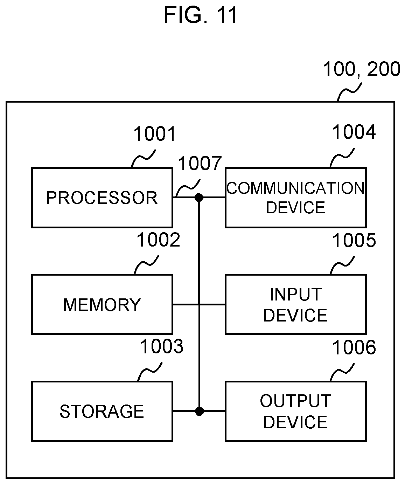

FIG. 2 is a function block diagram of the gNB100. FIG. 3 is a function block diagram of the UE200. Note that only the main function blocks related to the description of the embodiment are shown in FIGS. 2 and 3, and the gNB100 and the UE200 have other function blocks (For example, the power supply unit). FIGS. 2 and 3 show the functional block configurations of the gNB100 and the UE200, and refer to FIG. 11 for the hardware configuration.

### (2.1)gNB100

As shown in FIG. 2, the gNB100 includes a radio communication unit 110, an RRC processing unit 120, a TRP configuration unit 130, and a control unit 140.

The radio communication unit 110 transmits a downlink signal (DL signal) in accordance with the NR. The radio communication unit 110 receives an uplink signal (UL signal) in accordance with the NR.

The RRC processing unit 120 executes various processes in the radio resource control layer (RRC). Specifically, the RRC processing unit 120 can transmit the RRC Reconfiguration to the UE200. The RRC processing unit 120 can receive the RRC Reconfiguration Complete, which is a response to the RRC Reconfiguration, from the UE200. The RRC processing unit 120 is not limited to these RRC layer messages, but may also perform processing related to other messages (for example, RRC Release and system information (SIB: System Information Block)) .

The TRP configuration unit 130 executes configurations related to TRP. As described above, the gNB100 may include a plurality of TRPs. The TRP configuration unit 130 may execute the configuration of the plurality of TRPs (mTRPs). The TRP configuration unit 130 may execute the configuration of MIMO and beamforming. The MIMO may support single-user MIMO as described above, and may further support multi-user MIMO.

Based on the control of control unit 140, the TRP configuration unit 130 can configure the formation of a plurality of beams BM having different transmission directions using the TRP, and the beam BM reception from the UE200 using the TRP. The TRP configuration unit 130 can execute the processing related to failure detection (BFD) and recovery (BFR) of the beam BM.

The control unit 140 controls each function block constituting the gNB100. In particular, in this embodiment, the control unit 140 can perform control over the beam BM in an mTRP environment.

Specifically, the control unit 140 can perform control over the beam measurement by the UE200, the beam report from the UE200, and the beam indication from the gNB100.

Beam failure recovery (BFR) may be interpreted as a procedure for early recovery of a failed beam BM by transmitting a beam failure recovery request to the gNB100 using a non-failed beam BM when a failure occurs in the communicating beam BM due to a factor such as interruption of the propagation path in the primary cell (PCell) or primary cell (PSCell).

control unit 140 may perform beam control considering interference between cells or TRPs based on the beam report reported by the UE200, specifically, the Reference Signal Received Power (RSRP) measured by the UE200.

Further, in this embodiment, the control unit 140 may introduce a beam failure counter (BFI_COUNTER) and a timer (beamFailureDetectionTimer) specific to each TRP using TRP/BFD-RS (Reference Signal) or BFR-RS with respect to BFD and BFR in the mTRP environment. Note that TRP/BFD-RS and BFR-RS are tentative names and reference signals related to TRP and/or BFD/BFR, and may be interpreted as a type of DL-RS (Downlink Reference Signal).

### (2.2)UE200

As shown in FIG. 3, the UE200 includes a radio communication unit 210, an RRC processing unit 220, a beam configuration unit 230, and a control unit 240.

The radio communication unit 210 transmits an uplink signal (UL signal) in accordance with the NR. The radio communication unit 210 receives an uplink signal (DL signal) in accordance with the NR.

The radio communication unit 210 receives a plurality of beams BM transmitted from the gNB100. The radio communication unit 210 transmits a beam BM in a specific direction toward the gNB100, that is, a beam BM having directivity. As described above, the beam BM may be transmitted and received between the UE200 and the gNB100 (radio base station), in other words, a transmission and reception point (TRP).

In this embodiment, the TRP may be one or a plurality of TRPs. Accordingly, the radio communication unit 210 can transmit and receive a plurality of TRPs and beams BM at different locations. The radio communication unit 210 may comprise a transmission/reception unit that transmits and receives beams BM from the first transmission/reception point (For example, transmission/reception point 101 (see FIG. 4)) and the second transmission/reception point (For example, transmission/reception point 102).

The RRC processing unit 220 executes various processes in the radio resource control layer (RRC). Specifically, the RRC processing unit 220 can transmit and receive messages in the radio resource control layer.

The RRC processing unit 220 can receive RRC Reconfiguration from the network, specifically from the NG-RAN20. The RRC processing unit 220 can transmit RRC Reconfiguration Complete, which is a response to RRC Reconfiguration, to the network.

Such RRC messages may include information about beam BM failure detection (BFD) and recovery (BFR). For example, they may include configurations for the beam failure counter (BFI_COUNTER) and timer (beamFailureDetectionTimer) specific to each TRP described above.

The messages may also include radio link failure (RLF) reports and cell group (Master cell group (MCG), secondary cell group (SCG)) failure reports (MCGFailureInfo/SCGFailureInfo). The failure reports may include information elements about beam failures (For example, beamFailureRecoveryFailure, beamFailureRecoveryFailureForMultiTRP).

In addition, the RRC processing unit 220 may receive system information reported from the gNB100, specifically, the Master Information Block (MIB) and the System Information Block (SIB). The system information may include the configuration of the serving cell (ServingCellConfig), and the configuration may include information elements related to the mTRP and beam BM (For example, candidateBeamRS).

The beam configuration unit 230 executes configurations related to the beam BM transmitted and received by the radio communication unit 210. Specifically, the beam configuration unit 230 can execute configurations related to the transmission of the beam BM toward the specific TRP and the reception of the beam BM from the specific TRP based on the control of control unit 240. As described above, the TRP subject to transmission and reception may be one, two, or more.

The beam configuration unit 230 may transmit a report on the beam BM to the network. For example, the beam configuration unit 230 may transmit a report (beamFailureRecoveryFailureForMultiTRP) to the network indicating a failure to recover a beam failure for a plurality of TRPs. In this embodiment, the beam configuration unit 230 may configure a transmission/reception unit to transmit a report indicating a failure to recover a beam failure for a plurality of transmission/reception points.

The beam configuration unit 230 may also receive from the network a configuration indicating a candidate beam (candidateBeamRS) for each of the plurality of TRPs. In this embodiment, the beam configuration unit 230 may configure a transmission/reception unit to receive a configuration indicating a candidate beam for each of the plurality of transmission/reception points.

The beam failure may be determined by measuring the reception quality in the serving cell and the non-serving cell including the beam BM. The reception quality may include RSRP (Reference Signal Received Power), RSRQ (Reference Signal Received Quality), RSSI (Received Signal Strength Indicator), SINR (Signal-to-Interference plus Noise power Ratio), etc. The reception quality may be CSI (Channel State Information).

The serving cell may simply be interpreted as a cell to which the UE200 is connected, but more specifically, in the case of a UE of RRC_CONNECTED for which no carrier aggregation (CA) is configured, only one serving cell constitutes the primary cell. In the case of a UE of RRC_CONNECTED configured using a CA, the serving cell may be interpreted as indicating a set of one or more cells including the primary cell and all secondary cells.

The control unit 240 controls each functional block comprising UE200. In particular, in this embodiment, control unit 240 can perform control of beam BM in an mTRP environment.

Specifically, the control unit 240 can control a plurality of TRPs, specifically the beam BM with the first transmission/reception point (For example, transmission/reception point 101 (see FIG. 4)) and the second transmission/reception point (For example, transmission/reception point 102). The control of the beam BM may include directivity of the beam BM, transmission power, transmission timing, threshold configuration of BFD, execution of BFR, and the like.

When the control unit 240 detects a beam failure of the beam BM with the first transmission/reception point in a state where the first transmission/reception point and the second transmission/reception point are configured, that is, a plurality of TRPs are configured, a counter and a timer (BFI_COUNTER_TRP1, beamFailureDetectionTimer_TRP1) for the first transmission/reception point may be used.

Specifically, when a beam failure with the first transmission/reception point occurs, control unit 240 may increment (increase) BFI_COUNTER_TRP1 and start (start) beamFailureDetectionTimer_TRP1.

Similarly, when the control unit 240 detects a beam failure of the beam BM with the second transmission/reception point in a state where multiple TRPs are configured, it may use a counter and a timer (BFI_COUNTER_TRP2, beamFailureDetectionTimer_TRP2) for the second transmission/reception point.

Specifically, the control unit 240 may increment (increase) BFI_COUNTER_TRP2 and start (start) beamFailureDetectionTimer_TRP2 when a beam failure with the second transmission/reception point occurs.

In addition, the control unit 240 may execute the initial access procedure when the value of any counter (BFI_COUNTER_TRP1 or BFI_COUNTER_TRP2) exceeds a threshold in a specific cell.

Specifically, the control unit 240 may execute the random access (RA) procedure when the threshold is exceeded. The execution of the RA procedure may be interpreted as the transmission of Message 1 (PRACH) and/or Message 3.

The execution of the initial access procedure may also be interpreted as the execution of beam failure recovery (BFR) including the PRACH transmission. The specific cell may mean a special cell (SpCell), and SpCell may mean a PCell and a PSCell.

Further, when the value of any counter (BFI_COUNTER_TRP1 or BFI_COUNTER_TRP2) exceeds the threshold value in the secondary cell (SCell), control unit 240 may perform beam failure recovery (BFR) for the first transmission/reception point and the second transmission/reception point. Specifically, control unit 240 may perform BFR including transmission of the BFR MAC-CE (Control Element).

### (3)Operation of radio communication system

Next, the operation of the radio communication system 10 will be described. Specifically, the operation related to the beam BM control in the mTRP environment, specifically, the operation related to the beam failure detection (BFD) and recovery (BFR) will be described.

### (3.1) Operation Outline

FIG. 4 shows an example of configuring a beam BM in an mTRP environment. As shown in FIG. 4, the UE200 may transmit and receive a plurality of TRPs and a beam BM, respectively. Specifically, the UE200 can transmit and/or receive the beam BM with the transmission/reception point 101, and simultaneously transmit and/or receive another beam BM (which may be interpreted as a beam of different directivity) with the transmission/reception point.

The transmission/reception point 101 and the transmission/reception point 102 may be interpreted as different radio base stations (gNBs) or as positionally different transmission/reception points within the same radio base station.

The transmission/reception point 101 and the transmission/reception point 102 may be interpreted as forming cells, respectively.

In the following operation example, an operation for more appropriately controlling the beam BM in the mTRP environment will be described using parameters for the beam BM specific to each TRP in such an mTRP environment, specifically, parameters (which may be interpreted as information elements) associated with the counter for the beam failure (BFI_COUNTER) and the timer for detecting the beam failure (beamFailureDetectionTimer).

### (3.2) Operation Example 1

In this operation example, the UE200 may control a plurality of beams BM in the mTRP environment using a counter (BFI_COUNTER) for beam failures specific to each TRP and a timer (beamFailureDetectionTimer) for detecting beam failures.

As mentioned above, TRP/BFD-RS (tentative name) is based on the introduction of BFI_COUNTER and beamFailureDetectionTimer for each TRP (per TRP). In this case, the relationship (classification) between BFI_COUNTER and beamFailureDetectionTimer for each serving cell of 3GPP Release 16 is unclear, and UE200 may not be able to operate properly with respect to BFD and BFR.

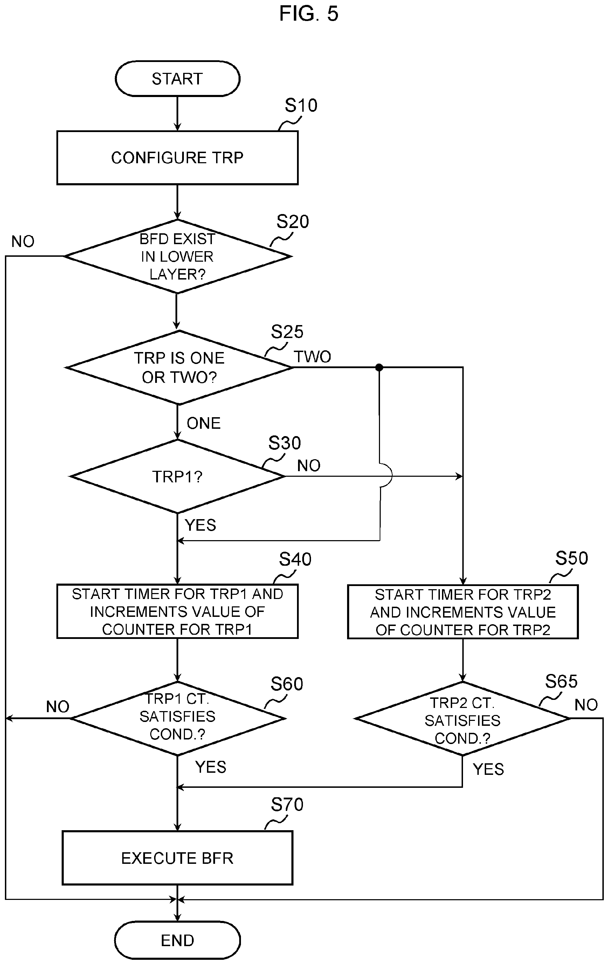

FIG. 5 shows an example of operation flow related to BFD and BFR of UE200 according to operation example 1. As shown in FIG. 5, the UE200 configures TRP (S10). The UE200 may configure multiple TRP (TRP1,2). TRP1, 2 may be interpreted to correspond to transmission/reception points 101, 102 shown in FIG. 4, for example.

Thus, in the state where TRP1, 2 are configured, the UE200 determines whether or not a beam failure detection (BFD) exists in the lower layer (S20). The lower layer may include a layer 1 (PHY) and a medium access control layer (MAC).

The UE200 determines the configuration number of TRPs (S25). Here, the UE200 determines whether the configured TRPs are 1 or 2.

When BFD is present, the UE200 determines whether BFD has occurred in the TRP1 (S30). In the case of the TRP1, the UE200 starts the timer for the TRP1, specifically beamFailureDetectionTimer_TRP1, and increments (increases) the value of the counter for the TRP1, specifically BFI_COUNTER_TRP1 (S40).

On the other hand, in the case of the TRP2, the UE200 starts the timer for the TRP1, specifically beamFailureDetectionTimer_TRP2, and increments (increases) the value of the counter for the TRP1, specifically BFI_COUNTER_TRP2 (S50). When it is determined that the configured TRP is 2, the processes in steps S40 and S50 may be executed respectively.

The UE200 determines whether the counter value satisfies a predetermined condition (S60, S65), and if the condition is satisfied, the BFR may be executed (S70).

The predetermined condition may be, for example, if BFI_COUNTER_TRP1>beamFailureInstanceMaxCount and/or BFI_COUNTER_TRP2>beamFailureInstanceMaxCount are satisfied in the SpCell.

Alternatively, if the sum of the value of BFI_COUNTER_TRP1 and BFI_COUNTER_TRP2 >beamFailureInstanceMaxCount is satisfied, the UE200 may perform a random access (RA) procedure.

As discussed above, a random access procedure may be interpreted as a type of initial access procedure, more broadly as a per-cell BFR involving PRACH transmission in PCell/PSCell as specified in 3GPP Release 15/16.

As discussed above, a BFR may be interpreted as a procedure for early recovery of a failed beam BM by transmitting a beam failure recovery request to gNB100 using a non-failed beam BM in the event of a failure of the communicating beam BM due to factors such as interruption of the propagation path.

Also, if any of the conditions described above are met in the SCell, the UE200 may perform BFR on both the cell corresponding to the TRP1 (Cells may be formed by TRP1, hereinafter the same) and the cell corresponding to the TRP2.

Alternatively, if any of the conditions described above are met in the SCell, the UE200 may perform BFR per cell (In particular, BFRs including SCell BFRs and/or BFR MAC CE (Control Element) transmissions) as specified in 3GPP Release 16.

The UE200 may also reset both BFI_COUNTER_TRP1 and BFI_COUNTER_TRP2 or only one of the corresponding counters when either beamFailureDetectionTimer_TRP1 or beamFailureDetectionTimer_TRP2 expires.

In addition, the UE200 may also start an existing beamFailureDetectionTimer (That is, per-cell timers that are not TRP-specific) when it starts beamFailureDetectionTimer_TRP1 or beamFailureDetectionTimer_TRP2.

Alternatively, the UE200 may not start an existing beamFailureDetectionTimer when it starts beamFailureDetectionTimer_TRP1 or beamFailureDetectionTimer_TRP2.

If the existing beamFailureDetectionTimer expires, the UE200 may also expire the beamFailureDetectionTimer_TRP1 and beamFailureDetectionTimer_TRP2 and reset both BFI_COUNTER_TRP1 and BFI_COUNTER_TRP2 to "0". Alternatively, if the beamFailureDetectionTimer_TRP1 or beamFailureDetectionTimer_TRP2 expires, the UE200 may expire the existing beamFailureDetectionTimer and reset the existing BFI_COUNTER per cell to "0".

### (3.3) Operation Example 2

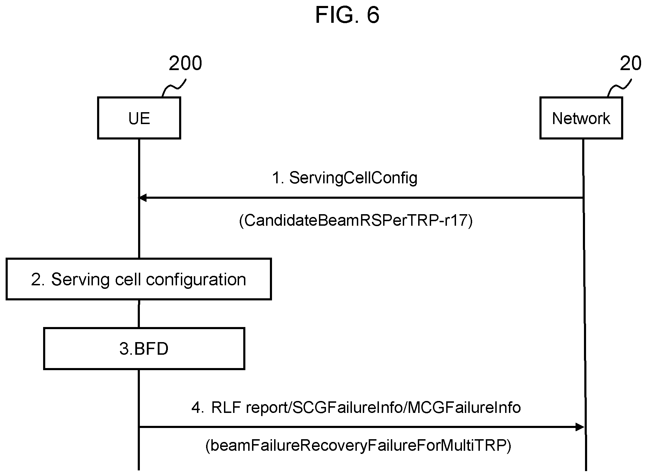

In this example, the UE200 may report the failure of the BFR for each TRP. FIG. 6 shows an example of a beam failure-related RRC communication sequence according to operation examples 2 and 3.

As shown in FIG. 6, the network (Specifically, NG-RAN20 may be used.) may transmit serving cell configuration information (ServingCellConfig) to the UE200 (step 1).

Based on the received ServingCellConfig, the UE200 executes the configuration for the serving cell including the beam BM (step 2). Here, as described above, a plurality of TRPs and the beam BM may be transmitted and received.

The UE200 detects a beam failure based on the reception quality (e.g., RSRP) of the beam BM (step 3).

The UE200 may transmit a report about the beam failure to the network (step 4). The report about the beam failure may be included in at least one of RLF report, MCGFailureInfo or SCGFailureInfo.

The rlf-cause/failure type of RLF report, MCGFailureInfo and SCGFailureInfo specified in 3GPP Release 16 specifies a cause value of beamFailureRecoveryFailure. However, this cause value cannot express that beam failure recovery (BFR) has failed (beamFailureRecoveryFailure) simultaneously in multiple TRPs such as TRP1 and TRP2 in an mTRP environment.

In this operation example, beamFailureRecoveryFailureForMultiTRP (which may be a tentative name) is added as the rlf-cause/failure type of RLF report, MCGFailureInfo, and SCGFailureInfo, and it may be expressed that beam failure recovery (BFR) failed simultaneously in multiple TRPs.

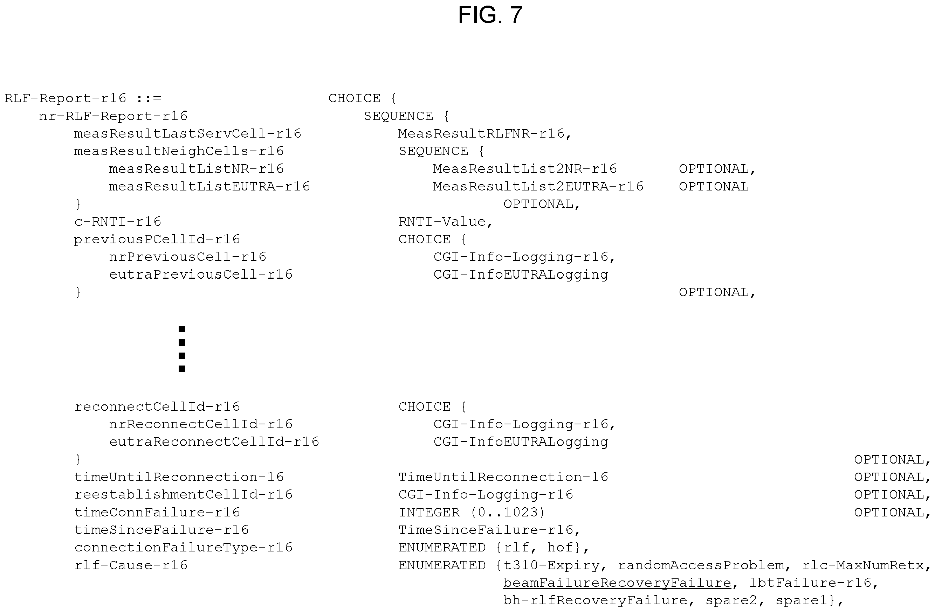

FIG. 7 shows a configuration example of RLF report according to the operation example 2. As shown in FIG. 7, beamFailureRecoveryFailure (underlined) of RLF report specified in 3GPP TS38.331 may be added with beamFailureRecoveryFailureForMultiTRP for multiple TRPs.

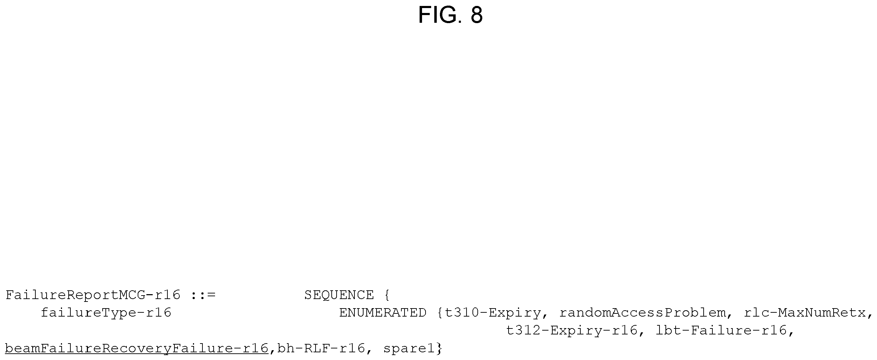

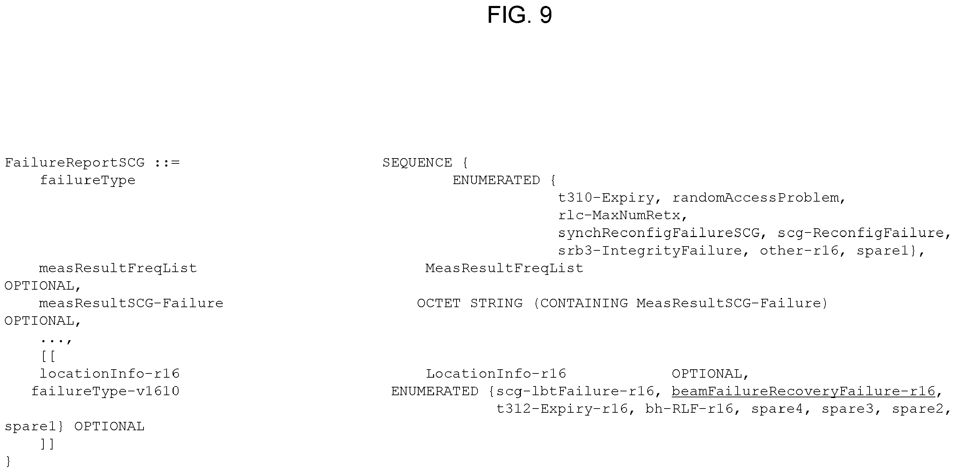

FIG. 8 shows a configuration example of MCGFailureInfo (FailureReportMCG) according to the operation example 2, and FIG. 9 shows a configuration example of SCGFailureInfo (FailureReportSCG) according to the operation example 2.

As shown in FIGS. 8 and 9, beamFailureRecoveryFailure (underlined) of FailureReportMCG and FailureReportSCG specified in 3GPP TS38.331 may be added with beamFailureRecoveryFailureForMultiTRP for multiple TRPs.

### (3.4) Operation Example 3

In this example, the UE200 may control the beam BM according to candidateBeamRS for each TRP. In 3GPP Release 16, the candidate beam included in the beamFailureRecoverySCellConfig is configured for each cell, but in an mTRP environment, the candidate beam included in the beamFailureRecoverySCellConfig must be configured for each TRP.

In this operation example, candidateBeamRS for each TRP (which may be based on the TRP ID or RS set ID) may be configured as the information included in the beamFailureRecoverySCellConFIG.

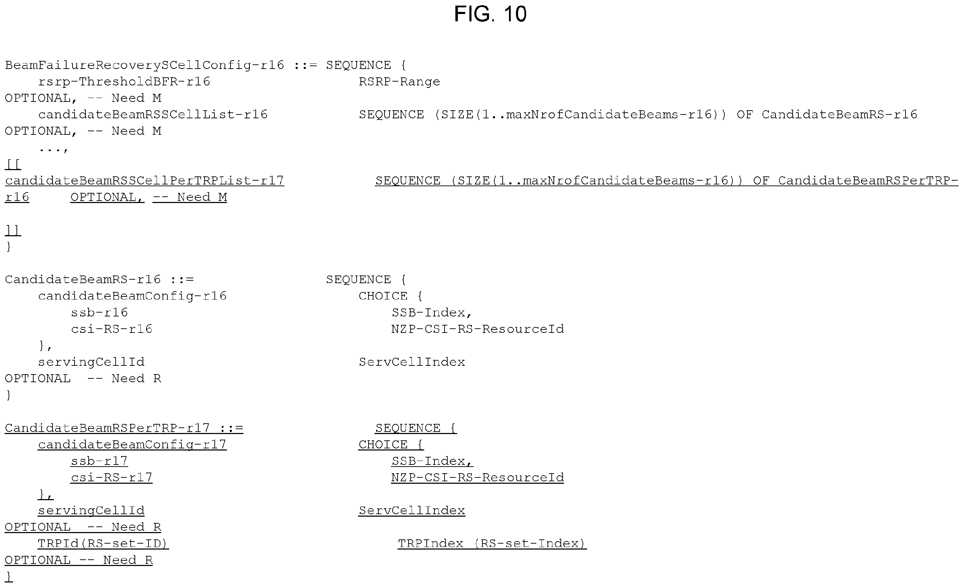

FIG. 10 shows an example configuration of the beamFailureRecoverySCellConfig according to the operation example 3. As shown in FIG. 10, the beamFailureRecoverySCellConfig specified in 3GPP TS38.331 may include candidateBeamRS for each TRP, specifically, CandidateBeamRSPerTRP (underlined).

The beamFailureRecoverySCellConfig may be included in ServingCellConfig, and the candidate beam may be interpreted as a candidate beam BM that can be used by UE200.

### (4)Operational effects

According to the above-described embodiment, the following effects can be obtained. Specifically, the UE200 can perform beam failure detection and/or recovery in an mTRP environment using counters and timers for each TRP.

Thus, by using parameters specific to each TRP, the relationship between the counters and timers for each conventional cell becomes clear, and the UE200 can appropriately perform beam failure detection and recovery operations, that is, beam management, in an mTRP environment.

In this embodiment, the UE200 may perform an initial access, such as an RA procedure involving a BFR, if the value of either BFI_COUNTER_TRP1 or BFI_COUNTER_TRP2 exceeds a threshold in the SpCell. The UE200 may also perform a BFR involving a BFR MAC CE transmission if the value of either BFI_COUNTER_TRP1 or BFI_COUNTER_TRP2 exceeds a threshold in the SCell. Thus, the UE200 may respond to beam failures in the mTRP environment more quickly.

In this embodiment, the UE200 can transmit a report (beamFailureRecoveryFailureForMultiTRP) indicating a failure to recover a beam failure for a plurality of TRPs. The UE200 can also receive a configuration (candidateBeamRS) indicating a candidate beam for each of the plurality of TRPs. Thus, precise beam control in an mTRP environment can be realized.

### (5)Other Embodiments

Although the embodiments have been described above, they are not limited to the description of the embodiments, and it is obvious to those skilled in the art that various modifications and improvements can be made.

For example, although the above embodiments have been described assuming that the plurality of TRPs belong to separate radio base stations, the plurality of TRPs may belong to the same radio base station. Each TRP may form a cell, or a radio base station including the plurality of TRPs may form a cell.

In the above description, setting (configure), activating (activate), updating (update), indicating (indicate), enabling (enable), specifying (specify), and selecting (select) may be interchanged. Similarly, link, associate, correspond, and map may be interchanged, and allocate, assign, monitor, and map may be interchanged.

In addition, specific, dedicated, UE-specific, and UE-specific may be interchanged. Similarly, common, shared, group-common, UE-common, and UE-shared may be interchanged.

In the present disclosure, terms such as "precoding," "precoder," "weight," "quasi-co-location (QCL)," "Transmission Configuration Indication state (TCI state)" "spatial relation," "spatial domain filter," "transmit power," "phase rotation," "antenna port," "antenna port group," "layer," "number of layers," "rank," "resource," "resource set," "resource group," "beam," "beam width," "beam angle," "antenna," "antenna element," "panel," and the like may be used interchangeably.

In addition, block diagrams (FIGS. 2 and 3) used in the description of the above-described embodiments show blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

In addition, the above-mentioned gNB100 and UE200 (the device) may function as a computer for processing the radio communication method of the present disclosure. FIG. 11 is a diagram showing an example of a hardware configuration of the device. As shown in FIG. 11, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIG. 2.3) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU) including an interface to peripheral devices, a controller, a computing device, a register, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

The notification of information is not limited to the aspects/embodiments described in the present disclosure and may be carried out using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals or combinations thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing steps, sequences, flowcharts, etc., of each of the embodiments/embodiments described in the present disclosure may be reordered as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the s same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base s station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe in an existing LTE (1 ms), a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
110 Radio communication unit
120 RRC processing unit
130 TRP configuration unit
140 Control unit
200 UE
210 Radio communication unit
220 RRC processing unit
230 Beam configuration unit
240 Control unit
1001 Processor
1002 Memory
1003 Storage
1004 Communication device
1005 Input device
1006 Output device
1007 Bus

## Claims

1. A terminal comprising:
a transmission/reception unit that transmits and receives a beam with a first transmission/reception point and a second transmission/reception point; and
a control unit that controls the beam with the first transmission/reception point and the second transmission/reception point, wherein
the control unit:
in a state where the first transmission/reception point and the second transmission/reception point are configured, when a beam failure of the beam with the first transmission/reception point is detected, uses a counter and a timer for the first transmission/reception point; and
in a state where the first transmission/reception point and the second transmission/reception point are configured, when a beam failure of the beam with the second transmission/reception point is detected, uses a counter and a timer for the second transmission/reception point.

2. The terminal according to claim 1, wherein the control unit performs an initial access procedure when a value of any of the counters exceeds a threshold in a specific cell.

3. The terminal according to claim 1, wherein the control unit performs recovery of the beam failure for the first transmission/reception point and the second transmission/reception point when a value of any of the counters exceeds a threshold in a secondary cell.

4. The terminal according to claim 1, wherein the transmission/reception unit transmits a report indicating a failure to recover a beam failure for a plurality of transmission and reception points.

5. The terminal according to claim 1, wherein the transmission/reception unit receives a configuration indicating a candidate beam for each of the plurality of transmission/reception points.

6. A radio communication method comprising the steps of:
transmitting/receiving a beam with a first transmission/reception point and a second transmission/reception point; and
controlling the beam with the first transmission/reception point and the second transmission/reception point, wherein
in the controlling step,
in a state where the first transmission/reception point and the second transmission/reception point are configured, when a beam failure of the beam with the first transmission/reception point is detected, counter and a timer for the first transmission/reception point are used; and
in a state where the first transmission/reception point and the second transmission/reception point are configured, when a beam failure of the beam with the second transmission/reception point is detected, counter and a timer for the second transmission/reception point are used.
